# EUROPÄISCHE PATENTSCHRIFT

(11) **EP 1 461 191 B1**
(45) Veröffentlichungstag und Bekanntmachung des Hinweises auf die Patenterteilung: **29.06.2005**
(21) Anmeldenummer: 02779552.5
(22) Anmeldetag: 13.11.2002
(51) Int. Cl.: B29B 7/74

(54) **GASBELADUNGSEINHEIT EINER POLYURETHANSPRITZGIESSANLAGE**
GAS CHARGING UNIT OF A POLYURETHANE INJECTION MOLDING SYSTEM
UNITE DE CHARGEMENT EN GAZ D'UNE INSTALLATION DE MOULAGE PAR INJECTION DE POLYURETHANE

(30) Priorität: 24.11.2001 DE 10157726
(43) Veröffentlichungstag der Anmeldung: 29.09.2004
(73) Patentinhaber: Krauss-Maffei Kunststofftechnik GmbH, 80997 München (DE)
(72) Erfinder: EHRLICHER, Stefan, 80997 München (DE)
(74) Vertreter: Zollner, Richard, Dipl.-Phys.
(86) Internationale Anmeldenummer: PCT/EP2002/012654
(87) Internationale Veröffentlichungsnummer: WO 2003/045653

(56) Entgegenhaltungen:
- EP-A- 0 705 641
- US-A- 2 948 928
- US-A- 3 232 709
- US-A- 3 773 300

## Beschreibung

Die Erfindung bezieht sich auf eine Gasbeladungseinheit für eine flüssige Polyurethan-Komponente, insbesondere eine mit Füllstoffen beladene Polyurethan-Komponente einer Polyurethan-Spritzgießanlage nach dem Oberbegriff des Patentanspruchs 1.

Bei bekannten Gasbeladungseinheiten dieser Art, wird das Gas mit Hilfe eines in einem Mischbehälter rotierenden Rührers in die Flüssigkomponente eingebracht. Das Gas kann dabei über die als Hohlwelle ausgebildete Welle des Rührers und über Gaskanäle in den Rührflügeln in die Flüssigkeitskomponente eingetragen werden. In einer anderen Ausführungsform kann das Gas in eine zum Mischbehälter führende Komponenten-Leitung eingeleitet werden, wobei die intensive Durchmischung und Beladung der Flüssigkeitskomponente mit Gas im Mischbehälter durch den mit hoher Drehzahl rotierenden Rührer erfolgt. Hierbei kann die Mischenergie oftmals nicht ausreichen, desgleichen können durch den hochtourig drehenden Rührer die Füllstoffe (z. B. Verstärkungsfasern) zerschlagen werden. Im weiteren besteht der Nachteil, dass die Bläschengröße des eingemischten Gases nicht klein genug und nicht ausreichend homogen ist. Ferner können sich vom Rührer unbeeinflusste Strömungswege einstellen, in denen keine nennenswerte Vermischung stattfindet.

Der Erfindung liegt daher die Aufgabe zu Grunde, eine Gasbeladungseinheit für flüssige und mit Füllstoff beladene Polyurethan-Komponenten (z. B. Isocyanat oder Polyol) zu schaffen, mit der bei weitestgehender Schonung der Füllstoffbestandteile, die Gasbeladung stets mit dem physikalisch maximal möglichen Gasanteil bewerkstelligt werden kann.

Diese Aufgabe wird erfindungsgemäß durch die im Patentanspruch 1 definierte Gasbeladungseinheit gelöst.

Erfindungsgemäß können auf Grund der axialen Verstellbarkeit der Mischelemente diese zur Öffnung im Mischbehälter so positioniert werden, dass sie entweder im Abstand zur Öffnung angeordnet sind und eine ungehinderte Passage für den Eintritt der Polyurethan-Komponente in den Mischbehälter bilden, oder in die Öffnung eintauchen, wonach die Polyurethan-Komponente mit dem eingedüsten Gas die Mischelemente durchströmen muss. Mit der Positionierbarkeit der beweglichen Mischelemente, kann in allen Betriebszuständen und bei unterschiedlichen Füllungsgraden der flüssigen Polyurethan-Komponente die Gasbeladungseinheit mit optimalem Wirkungsgrad betrieben werden, da mit dem System stets der von der Pumpe erzeugte, maximal zulässige Systemdruck (z. B. 25 bar) für eine optimale Mischwirkung ausgenutzt werden kann. Der Strukturviskosität der mit Füllstoffen beladenen Polyurethan-Komponente d. h. den je nach Füllungsgrad und Temperatur sowie verwendeter Polyurethan-Komponente (z. B. Isocyanat oder Polyol)sich ändernden Viskositätswerten kann dabei voll Rechung getragen werden.

Vorzugsweise ist der Mischbehälter zylindrisch und die Öffnung das Ende eines in den Boden des Bevorratungstanks einmündenden Rohres, in das die axial zur Rohrachse beweglichen Mischelemente einführbar sind. Am anderen Ende des Rohres sind vorteilhafterweise feste Mischelemente handelsüblicher Bauart angeordnet, die bei niedrigem Druckverlust und einer niedrigen Scherung eine gute Vorvermischung der mit Füllstoffen beladenen und mit eingedüstem Gas versehenen Polyurethan-Komponente ergeben.

In weiterer bevorzugter Ausgestaltung der Erfindung ist im Bereich der Gaseindüsung eine Ultraschallsonotrode angeordnet, die die Aufteilung und Homogenisierung des eingedüsten Gases in kleine und fein verteilte Gasbläschen fördert.

Die Erfindung wird nachfolgend anhand eines Ausführungsbeispiels in Verbindung mit den Zeichnungen näher erläutert. Es zeigt in schematischer Darstellung:
- Fig. 1 a:: eine Ausführungsform eines Mischbehälters nach dem Stand der Technik,
- Fig. 1b:: eine andere Ausführungsform eines Mischbehälters nach dem Stand der Technik,
- Fig. 2:: ein Funktionsschema der erfindungsgemäßen Gasbeladungseinheit,
- Fig. 3:: die Detaildarstellung des Mischbehälters nach Fig. 2 im vergrößerten Maßstab, mit statischen Mischelementen und Ultraschallsonotrode und
- Fig. 4:: die Detailansicht eines in den Figuren 2 und 3 lediglich schematisch dargestellten Mischelements.

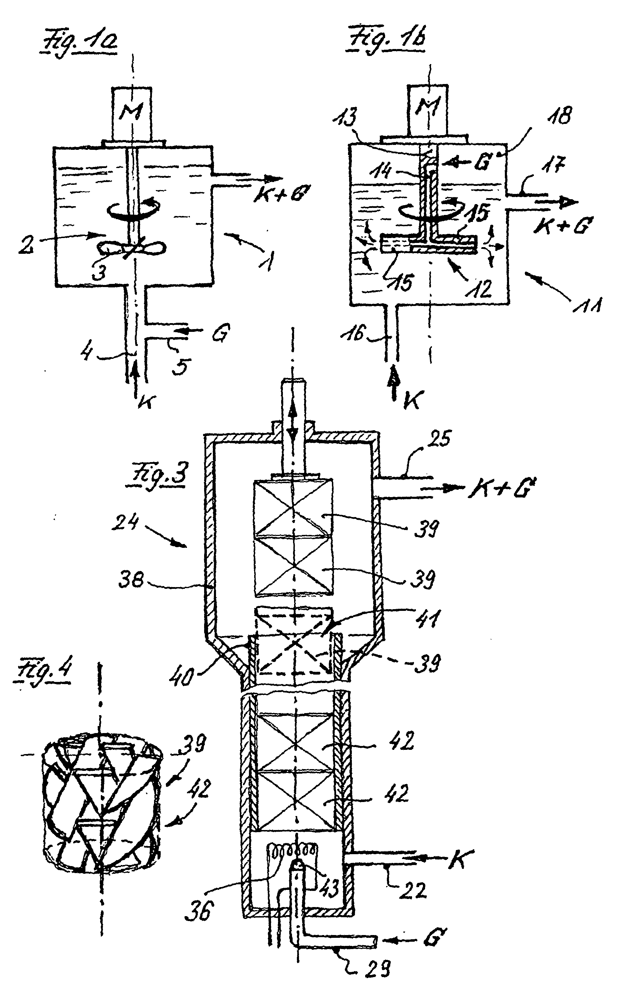

Der in Fig. 1 b dargestellte bekannte Mischbehälter 1 einer nicht näher dargestellten Gasbeladungseinheit einer Polyurethan-Spritzgießanlage enthält ein über einen Motor M angetriebenen Rührer 2 mit Rührflügeln 3. In den Mischbehälter 1 führt eine Komponentenzuführleitung 4 für die Komponente K (z. B. Polyol oder Isocyanat mit Füllstoffen). Über die Gaszuführleitung 5 wird das Gas G in die Komponente K in der Komponentenzuführleitung 4 eingedüst. Vom Mischerbehälter 1 zweigt die Abführleitung 6 für die mit Gas beladene Komponente K+G ab.

Die in Fig. 1b dargestellte weitere Ausführungsform eines bekannten Mischbehälters 11 enthält einen über einen Motor M angetriebenen Rührer 12, der eine Hohlwelle 13 und mit Gaskanälen versehene Rührflügel 15 aufweist. In den Mischbehälter führt eine Komponentenzuführleitung 16 für die Komponente K. Vom Mischbehälter 11 zweigt die Abführleitung 17 für die mit Gas G beladene Komponente K+G ab. Das Gas G wird vom oberhalb des Flüssigkeitsspiegels der Komponente K gelegenen Gasraum 18 über die Hohlwelle 13 des rotierenden Rührers 12 angesaugt und über die in den Rührflügeln 15 gelegenen Gaskanäle 14 in die Komponente K eingetragen.

Bei diesen bekannten Gasbeladungseinheiten bestehen die Nachteile, dass die Mischenergie der Rührer 2 und 12 für einen physikalisch maximal möglichen Gaseintrag nicht ausreicht, dass die hochtourig drehenden Rührer die Füllstoffe (Verstärkungsfasern) zerschlagen und eine aufwendige Abdichtung erfordern. Zudem erwärmen die dynamischen Rührer die Polyurethan-Komponenten (Isocyanat oder Polyol) verhältnismäßig stark.

Im nachfolgenden wird die erfindungsgemäße Gaseintragsvorrichtung beschrieben.

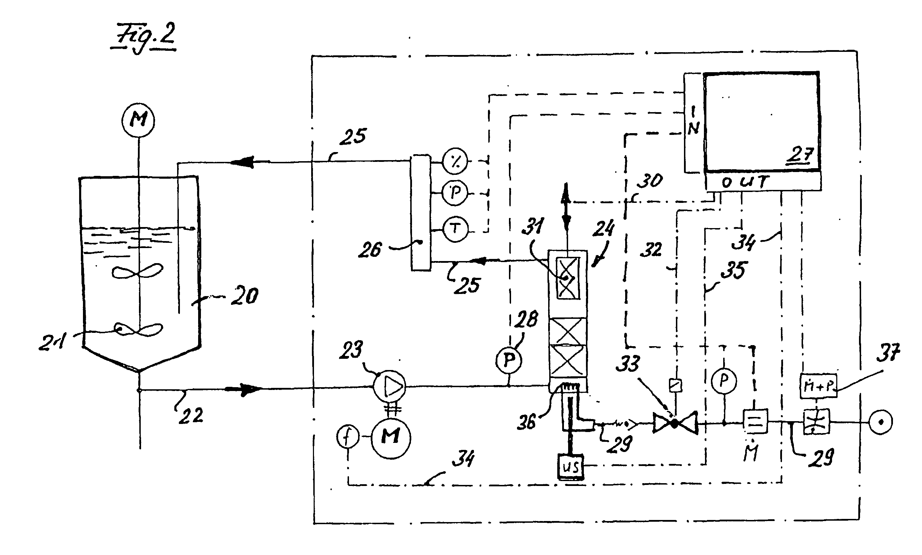

Die Fig. 2 zeigt das Funktionsschema einer Gasbeladungseinheit mit einem mit Polyurethan-Komponente K gefüllten Bevorratungstank 20 in dem langsam drehende Rührer 21 dafür sorgen, dass sich die in der Polyurethan-Komponente enthaltenen Füllstoffe nicht absetzen. Vom Boden des Bevorratungstanks 20 führt eine Komponentenzulaufleitung 22 über eine Pumpe 23 mit frequenzgeregeltem Motor zu dem erfindungsgemäßen Mischer 24, der in Fig. 3 näher dargestellt ist und zu dieser Figur nachfolgend eingehender erläutert wird.

Vom Mischer 24 führt eine Rückführleitung 25 über eine Messeinheit 26 zur Messung des Gasbeladungsgrades in den Bevorratungstank 20. Die Messwerte der Messeinheit 26 werden einem Rechner 27 zugeführt.

In der Komponentenzulaufleitung 22 ist ein Druckmesspunkt 28 angeordnet, von dem die Druckmesswerte der dem Mischer 24 zulaufenden Komponente in den Rechner 27 übertragen werden. Im weiteren werden dem Rechner 27 die Druckmesswerte aus der Gaszuführleitung 29 zugeführt.

Vom Rechner 27 werden folgende Stellelemente angesteuert:
Über die Steuerleitung 30 wird der transversal wirkende Stellmotor (nicht dargestellt) für die Verstellung der beweglichen Mischelemente 31 angesteuert und über die Steuerleitung 32 wird das Auf/Zu-Stellelement 33 für die Gaszufuhr über die Gaszuführleitung 29 angesteuert. Im weiteren werden vom Rechner 27 über die Steuerleitung 34 der frequenzgeregelte Motor für die Pumpe 23 und über die Steuerleitung 35 eine Ultraschallsonotrode 36 angesteuert. Eine weitere Steuerverbindung besteht zwischen dem Rechner 27 und einer in der Gaszuführleitung 29 angeordneten Einheit 37 zur Messung der Gasdruck- und Gasdurchflussmengenwerte.

Die Fig.3 zeigt den Mischer 24 nach Fig. 2 im vergrößerten Maßstab. Der Mischer 24 besteht aus einem zylindrischen Mischbehälter 38, in dem in Richtung der Achse des Mischbehälters 38 hin und her bewegbare Mischelemente 39 angeordnet sind. Der Antriebsmotor für die Hin- und Herbewegung (nicht dargestellt) liegt außerhalb des Mischbehälters 38. Vom Mischbehälter 38 zweigt die Komponenten-Rückführungsleitung 25 ab. Am Boden des Mischbehälters 38 schließt sich ein in den Mischbehälter 38 einmündendes Rohr 40 an, in dessen Öffnung 41 die Mischelemente 39 ein- und ausfahrbar sind. In der in Volllinien dargestellten Position der beweglichen Mischelemente 39 sind diese im Abstand zur Öffnung 41 angeordnet und bilden eine freie Durchtrittspassage für die Polyurethan-Komponente vom Rohr 40 in den Mischbehälter 38. In der in unterbrochenen Linien dargestellten Position der Mischelemente 39 sind diese in das Rohr 40 eingetaucht, sodass die Polyurethan-Komponente die Mischelemente durchströmen muss. Die Strömungswiderstand kann dabei durch die Eintauchtiefe des Mischelementes 39 variiert werden. Am anderen Ende des Rohres 40 sind statische Mischelemente 42 angeordnet. Die axial beweglichen Mischelemente 39 und die statischen Mischelemente 42 sind nur schematisch dargestellt. Sie können identischen Aufbau haben und einer handelsüblichen Bauform entsprechen, wie eines in Fig. 4 in perspektivischer Ansicht mit unterschiedlich angestellten Leit- und Verwirbelungsflächen dargestellt ist. Das Rohr 40 ist in der in Fig. 3 dargestellten Ausführungsform von einem Gehäuse umgeben. Grundsätzlich kann das Rohr 40 jedoch auch vom Gehäuse allein gebildet werden. Am unteren Ende des Rohres 40 mündet die Komponentenzulaufleitung 22 für die Komponente K ein, desgleichen die Gasdüse 43 der Gaszuführleitung 29. Im weiteren befindet sich im Bereich der Einmündung der Komponente K und des Gases G die Ultraschallsonotrode 36.

Im Betrieb des Mischers 24 wird die in das untere Ende Rohres 40 durch die Komponentenzulaufleitung 22 eingeleitete Polyurethan-Komponente K über die Gasdüse 43 mit Gas G beaufschlagt, das sich in kleinen Bläschen in der Polyurethan-Komponente K verteilt. Die Verteilung kann durch die Ultraschallsonotrode 36 noch verbessert werden. Die mit Gas beladene Polyurethan-Komponente K+G durchströmt die statischen Mischelemente 42.

In einer Betriebsphase, bei der die Polyurethan-Spritzgießanlage angefahren wird, kann bei einem statischen Mischer mit fixen Mischelementen die aus dem Bevorratungstank 20 und der Komponentenzulaufleitung 22 zugeführte Polyurethan-Komponente noch nicht die erforderliche Betriebstemperatur haben. Das Anfahren der Polyurethan-Spritzgießanlage im kalten Zustand mit derartigen Mischern ist dabei nicht möglich, da die strukturviskose Polyurethan-Komponente (Isocyanat oder Polyol) zu hochviskos ist und die Anlage den maximal zulässigen Betriebsdruck überschreiten würde.

Nach der Erfindung hingegen können in der Anfahrphase die beweglichen Mischelemente 39 so eingestellt werden (Darstellung in Fig. 3 in Volllinien), dass zwischen der Öffnung 41 und den Mischelementen 39 eine freie Passage für den Durchtritt der mit Gas beaufschlagten Polyurethan-Komponente K+G besteht. Die Anlage kann daher bereits in der Anfahrphase schon mit dem von der Pumpe 23 erzeugten maximalen Betriebsdruck (z. B. 25 bar) betrieben werden. Mit zunehmender Erwärmung der Polyurethan-Komponente kann das bewegliche Mischelement 39 an die Öffnung 41 herangebracht und im weiteren in das Rohr 40 eingefahren werden. Dieser Vorgang wird über den in Fig. 2 dargestellten, jedoch nicht näher beschriebenen Regelkreis mit Rechner 27 eingeregelt, wodurch das System bei Vorgabe eines zulässigen, von der Pumpe 23 erzeugten Betriebsdruckes den unterschiedlichsten Beschaffenheiten bzw. Viskositätswerten der Polyurethan-Komponente Rechnung getragen werden kann. Unabhängig von der Temperatur oder der Art der Polyurethan-Komponente (Isocyanat oder Polyol) oder dem Füllungsgrad der Polyurethan-Kunststoffkomponente kann das Gasbeladungssystem stets mit optimalem Wirkungsgrad betrieben werden, wobei die Mischelemente 39 und 42 als statische Mischer wirken, die im Gegensatz zu den hochtourig drehenden Rührern 2 und 12 (Fig. 1a u. 1b) nur einen geringen Bau- und Wartungsaufwand erfordern und keine Beschädigung der Füllstoffe (Verstärkungsfasern) in der Polyurethan-Kunststoffkomponente hervorrufen. Die Beweglichkeit der Mischelemente 39 bezieht sich dabei nur auf die sehr langsamen transversalen Stellbewegungen.

### Bezugszeichenliste

Fig. 1a:
- **1**: Mischer
- **2**: Rührer
- **3**: Rührflügel
- **4**: Komponentenzuführleitung
- **5**: Gaszuführleitung

Fig. 1b:
- **11**: Mischer
- **12**: Rührer
- **13**: Hohlwelle
- **14**: Gaskanal
- **15**: Rührflügel
- **16**: Komponentenzuführleitung
- **17**: Abführleitung
- **18**: Gasraum

Fig. 2:
- **20**: Bevorratungstank
- **21**: Rührer
- **22**: Komponentenzulaufleitung
- **23**: Pumpe
- **24**: Mischer
- **25**: Rückführleitung
- **26**: Messeinheit
- **27**: Rechner

- **28**: Druckmesspunkt
- **29**: Gaszuführleitung
- **30**: Steuerleitung (für Stellmotor der bewegl. Mischelemente)
- **31**: Mischelemente, beweglich
- **32**: Steuerleitung (für Gas- Auf/Zu-Stellelement)
- **33**: Auf/Zu-Stellelement
- **34**: Steuerleitung (für Pumpe 23)
- **35**: Steuerleitung (für Ultraschallsonotrode 36)
- **36**: Ultraschallsonotrode
- **37**: Einheit zur Messung vom Gasdruck und Gasdruckflussmenge

Fig. 3:
- **38**: Mischbehälter, zylindrisch
- **39**: Mischelemente
- **40**: Rohr
- **41**: Öffnung
- **42**: Mischelement, statisch
- **43**: Gasdüse

## Patentansprüche

1. Gasbeladungseinheit für eine flüssige Polyurethan-Komponente, insbesondere eine mit Füllstoff beladene Polyurethan-Komponente einer Polyurethan-Spritzgießanlage, mit einem Mischbehälter, in dem bewegliche Mischelemente angeordnet sind und in dem die flüssige Polyurethan-Komponente mit über einer Düse zugeführtem Gas eingeleitet wird, **dadurch gekennzeichnet, dass** die beweglichen Mischelemente (39) im Mischbehälter (38) fluchtend und axial zu einer Öffnung (41) im Mischbehälter (38) verstellbar angeordnet sind, über die die Polyurethan-Komponente mit dem über eine Düse zugeführten Gas einleitbar ist.

2. Gasbeladungseinheit nach Anspruch 1, **dadurch gekennzeichnet, dass** der Mischbehälter (38) zylindrisch und die Öffnung (41) das Ende eines in den Mischbehälters (38) mündenden Rohres (40) ist, in das die beweglichen Mischelemente (39) einführbar sind und an dessen anderem Ende die flüssige Polyurethan-Komponente (K) eingeleitet und das Gas (G) über eine Düse (43) injiziert wird, wobei die flüssige Polyurethan-Komponente (K) nach der Injektion das Gases durch ein oder mehrere feste Mischelemente 42 geleitet wird.

3. Gasbeladungseinheit nach einem der Ansprüche 1 und 2, **dadurch gekennzeichnet, dass** in Bereich der Eindüsung des Gases (G) in die flüssige Polyurethan-Komponente (K) eine Ultraschallsonotrode (36) angeordnet ist.

## Claims

1. Gas charging unit for a liquid polyurethane component, in particular a polyurethane component loaded with filler of a polyurethane injection moulding system, with a mixing container in which movable mixing elements are arranged, and in which the liquid polyurethane component is introduced with gas fed through a nozzle, **characterised in that** the movable mixing elements (39) are arranged in alignment in the mixing container (38) and are axially adjustable in the mixing container (38) relative to an opening (41), through which the polyurethane component can be introduced with the gas supplied via a nozzle.

2. Gas charging unit according to claim 1, **characterised in that** the mixing container (38) is cylindrical and the opening (41) is the end of a pipe (40) opening into the mixing container (38), into which the movable mixing elements (39) can be inserted, and at its other end the liquid polyurethane component (C) is introduced and the gas (G) is injected via a nozzle (43), whereby the liquid polyurethane component (C) is supplied after the injection of the gas through one or more fixed mixing elements (42).

3. Gas charging unit according to one of claims 1 and 2, **characterised in that** an ultrasonic sonotrode (36) is arranged in the region of the injection of the gas (G) into the liquid polyurethane component (C).

## Revendications

1. Unité de chargement de gaz pour un composant de polyuréthane liquide, en particulier un composant de polyuréthane, chargé avec une charge, d'une installation de moulage par injection du polyuréthane, ayant un récipient de mélange, dans lequel sont disposés des éléments de mélange mobiles et dans lequel le composant de polyuréthane liquide est introduit avec un gaz amené par une buse, **caractérisée en ce que** les éléments de mélange mobiles (39) dans le récipient de mélange (38) sont disposés de manière à pouvoir être déplacés dans le récipient de mélange (38) en alignement et axialement par rapport à une ouverture (41), par le biais de laquelle le composant de polyuréthane peut être introduit avec le gaz amené par une buse.

2. Unité de chargement de gaz selon la revendication 1, **caractérisé en ce que** le récipient de mélange (38) est cylindrique et que l'ouverture (41) est l'extrémité d'un tube (40) débouchant dans le récipient de mélange (38), dans lequel les éléments de mélange mobiles (39) peuvent être introduits et sur l'autre extrémité duquel le composé de polyuréthane liquide (K) est introduit et le gaz (G) est injecté par le biais d'une buse (43), le composé de polyuréthane liquide (K) étant dirigé, après l'injection du gaz, à travers un ou plusieurs éléments de mélanges fixes (42).

3. Unité de chargement de gaz selon l'une des revendications 1 et 2, **caractérisée en ce qu'**une sonotrode aux ultrasons (36) est disposée dans la zone de l'insufflation du gaz (G) dans le composant de polyuréthane liquide (K).
